# EUROPEAN PATENT APPLICATION

(11) **EP 2 264 957 A1**
(43) Date of publication of application: **22.12.2010**
(21) Application number: 09723787.9
(22) Date of filing: 30.03.2009
(51) Int. Cl.: H04L 12/58

(54) **MESSAGE FILTERING METHOD, APPARATUS AND SYSTEM**

(30) Priority: 28.03.2008 CN 200810090361
(71) Applicant: Huawei Technologies Co., Ltd., Shenzhen, Guangdong Province 518129 (CN)
(72) Inventor: CHEN, Qian, Guangdong 518129 (CN)
(74) Representative: Epping - Hermann - Fischer
(86) International application number: PCT/CN2009/000342
(87) International publication number: WO 2009/117905

(57) **Abstract**

A method, an apparatus, and a system for filtering messages are disclosed herein. The system includes a Media Controller (MC) and a Media Processor (MP). The MC is configured to: encapsulate a protocol package according to filtering setting information, and send the protocol package that carries the filtering setting information to the MP; and the MP is configured to: resolve the received protocol package and obtain the filtering setting information, and perform filtering operations on received and/or sent messages according to the filtering setting information. The method includes: resolving the received protocol package and obtaining the filtering setting information, and performing filtering operations on the received and/or sent messages according to the filtering setting information. In this way, the service-layer filtering setting information may be sent to the media layer through the control layer in the separation architecture, the filtering setting information on the control layer is synchronized with that on the media layer. Therefore, the messages are filtered in the separation network architecture.

## Description

This application claims priority to Chinese Patent Application No. 200810090361.4, filed with the Chinese Patent Office on March 28, 2008 and entitled "Method, Apparatus and System for Filtering Messages", which is hereby incorporated by reference in its entirety.

### FIELD OF THE INVENTION

The present invention relates to communications technologies, and in particular, to a method, an apparatus, and a system for filtering messages.

### BACKGROUND OF THE INVENTION

In centralized network architecture, filtering setting information is generally configured by a user or a service provider, and a device for receiving and sending messages processes the received or sent messages according to the filtering setting information. In centralized network architecture, the service/control part and media processing part are under centralized control, and the media processing part can obtain the filtering setting information directly, and filter the received or sent messages according to the filtering setting information. However, the method for filtering messages in the centralized network architecture is not applicable to a network system of separation architecture.

In the network system of separation architecture, the service/control is separated from the bearer, and the network entities connect and communicate with each other through a standard protocol. The main features of separation architecture include the following content:
1. A service is separated from call control, and the service is separated from the network. The control-layer device is responsible for processing connection of basic calls and control over basic calls, and service logic is generally provided by an Application Server (AS). Therefore, the service is separated from the call control and the service is independent of the network.
2. The service/control is separated from the bearer. The service provision and the bearer are on two independent layers, and the service may be separated from the bearer completely. The user can configure and define its own service features independently without caring about the type of network that bears the service or the type of terminal. Therefore, the provision of services and applications is more flexible.

In the separation network architecture, the AS and/or Media Controller (MC) is separated from a Media Processor (MP), and communicates with the MP through a standard protocol such as an H.248 protocol. The AS is responsible for managing service logic and delivering information about user operations to the MC; and the MC synchronizes services according to the service indication of the AS, and instructs the MP to perform the relevant operations. Under control of the MC, the MP provides corresponding bearer media resources.

Unlike the centralized network architecture, in the separation network architecture, the entity that generates the filtering setting information is different from the entity that applies the filtering setting information. For example, in the separation network architecture, the MC is separated from the MP, and the MP is unable to know the filtering setting information of the MC and therefore is unable to filter the messages received or sent by the MP.

### SUMMARY OF THE INVENTION

The embodiments of the present invention provide a method, an apparatus and a system for filtering messages in order to filter received and/or sent messages in the separation network architecture.

To fulfill the foregoing objectives, one aspect of the present invention provides a message filtering system. The system includes: an MC and an MP.

The MC is configured to: encapsulate a protocol package according to filtering setting information, and send the protocol package that carries the filtering setting information to the MP.

The MP is configured to: resolve the received protocol package to obtain the filtering setting information, and filter received and/or sent messages according to the filtering setting information.

In the message filtering system described above, the MC encapsulates a protocol package according to the received filtering setting information, and sends the protocol package that carries the filtering setting information to the MP; and the MP resolves the protocol package to obtain the corresponding filtering setting information, and filters the received and sent messages according to the filtering setting information. In this way, the service-layer filtering setting information may be sent to the media layer through the control layer, the filtering setting information on the control layer is synchronized with that on the media layer. Therefore, the messages are filtered in the separation network architecture.

To fulfill the foregoing objectives, a second aspect of the present invention provides an MC. The MC includes:
a receiving unit, configured to receive one of filtering setting information and a filtering script that carries the filtering setting information;
an encapsulating unit, configured to encapsulate a protocol package according to the received filtering setting information; and
a sending unit, configured to send the protocol package that carries the filtering setting information to an MP.

In the MC described above, the encapsulating unit encapsulates a protocol package according to the received filtering setting information, and the sending unit sends the protocol package that carries the filtering setting information to the MP. In this way, the control layer can send the service-layer filtering setting information to the media-layer MP, thus facilitating synchronization of the filtering setting information between the control layer and the media layer. Therefore, messages are filtered in the separation network architecture.

To fulfill the foregoing objectives, a third aspect of the present invention provides an MP. The MP includes:
a resolving unit, configured to resolve a received protocol package to obtain filtering setting information carried in the protocol package; and
a filtering unit, configured to filter received and/or sent messages according to the filtering setting information.

In the MP described above, the resolving unit resolves the received protocol package to obtain the filtering setting information carried in the protocol package, and the filtering unit filters the received and/or sent messages according to the filtering setting information. In this way, the media layer may obtain the filtering setting information sent by the control layer, thus facilitating synchronization of the filtering setting information between the control layer and the media layer. Therefore, messages are filtered in the separation network architecture.

To fulfill the foregoing objectives, a fourth aspect of the present invention provides a message filtering method. The method includes:
resolving a received protocol package to obtain filtering setting information carried in the protocol package, and filtering received and/or sent messages according to the filtering setting information.

The message filtering method described above resolves the received protocol package to obtain the filtering setting information carried in the protocol package, and the filtering unit filters the received and/or sent messages according to the filtering setting information. In this way, the media layer can obtain the filtering setting information sent by the control layer, thus facilitating synchronization of the filtering setting information between the control layer and the media layer. Therefore, messages are filtered in the separation network architecture.

### BRIEF DESCRIPTION OF THE DRAWINGS

To make the technical solution under the present invention or in the prior art clearer, the following briefly describes the accompanying drawings involved in the description of the embodiments of the present invention or the prior art. Apparently, the accompanying drawings briefly described below are for the exemplary purpose only and are not exhaustive, and persons of ordinary skill in the art can derive other drawings from such accompanying drawings without any creative effort.
FIG. 1 shows a structure of a message filtering system according to a first embodiment of the present invention;
FIG. 2 shows a structure of a message filtering system according to a second embodiment of the present invention;
FIG. 3 shows a structure of an MC according to an embodiment of the present invention;
FIG. 4 shows a structure of an MP according to an embodiment of the present invention;
FIG. 5 is a flowchart of a message filtering method according to the first embodiment of the present invention; and
FIG. 6 is a flowchart of a message filtering method according to the second embodiment of the present invention.

### DETAILED DESCRIPTION OF THE EMBODIMENTS

The following detailed description is given in conjunction with the accompanying drawings to provide a thorough understanding of the present invention. Evidently, the drawings and the detailed description are merely representative of particular embodiments of the present invention, and the embodiments are regarded as illustrative in nature and are not exhaustive or restrictive. All other embodiments, which may be derived by those skilled in the art from the embodiments given herein without any creative efforts, shall fall within the scope of the present invention.

The technical solution under the present invention is elaborated below with reference to accompanying drawings and exemplary embodiments. The protocol package described herein refers to a packet or message compliant with a communication protocol. The protocol package that carries filtering setting information refers to a packet or message that complies with a communication protocol and carries the filtering setting information. After the protocol package is encapsulated according to the filtering setting information, the contents of the protocol package may include only the filtering setting information, or include other information and the filtering setting information. For example, The communication protocol may be a Media Gateway Control Protocol (MGCP) such as H.248/MeGaCo.

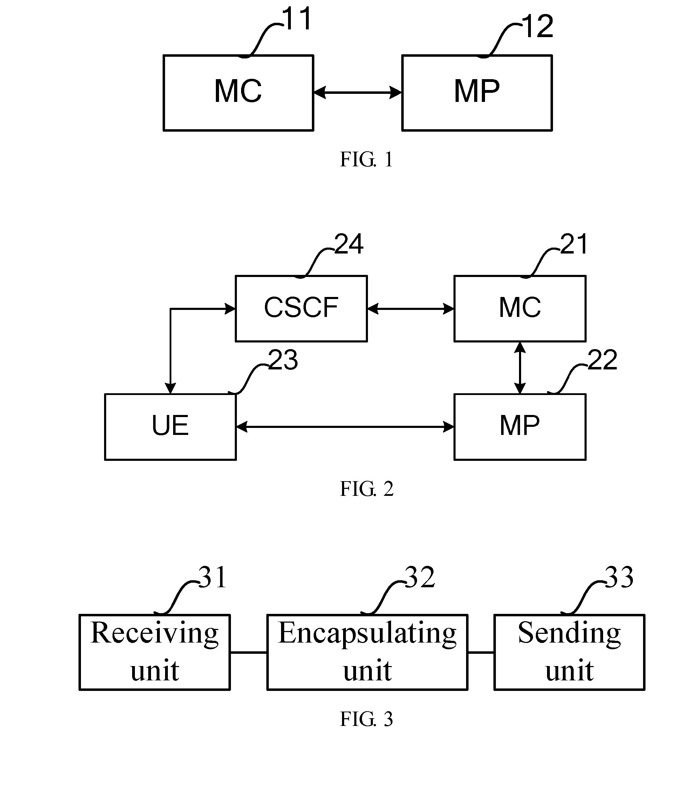

FIG. 1 shows a structure of a message filtering system according to a first embodiment of the present invention. As shown in FIG. 1, the system includes: an MC 11 and an MP 12.

The MC 11 is configured to: encapsulate a protocol package according to filtering setting information, and send the protocol package that carries the filtering setting information to the MP 12.

The MP 12 is configured to: resolve the received protocol package to obtain the filtering setting information, and filter messages received and/or sent by the MP 12 according to the filtering setting information.

In the separation network architecture, the filtering setting information is sent from the service layer, and the filtering setting information may be configured by the user or the service provider. The MC 11 is located on the control layer, and the MP 12 is located on the media layer. The MC 11 communicates with the MP 12 through a standard protocol.

In this embodiment, the MC encapsulates a protocol package that carries the filtering setting information according to the received filtering setting information, and sends the protocol package to the MP; and the MP resolves the protocol package to obtain the corresponding filtering setting information, and the MP filters the received and sent messages according to the filtering setting information. In this way, the service-layer filtering setting information may be sent to the media layer through the control layer, the filtering setting information on the control layer is synchronized with that on the media layer. Therefore, the messages are filtered in the separation network architecture.

FIG. 2 shows a structure of a message filtering system according to a second embodiment of the present invention. One of the application scenarios of the message filtering system shown in FIG. 2 is a system for filtering messages of a message conference service in an IP Multimedia Subsystem (IMS).

The IMS is universal network architecture put forward by the 3GPP standardization organization on the basis of Release 5 (R5) to provide multimedia services based on the IP network. The IMS provides a multimedia service and platform intended to IP packet switching for the next-generation IP-based mobile network. The IMS introduces Session Initiation Protocol (SIP) as a service control protocol, and provides multimedia real-time communication services by separating the service control from the bearer control.

As applied in an IMS system, the MC 21 in the separation architecture is a Multimedia Resource Function Controller (MRFC), and the MP 22 in the separation architecture is a Multimedia Resource Function Processor (MRFP). For example, in a message conference service, User Equipment (UE) 23 is allowed to send messages to other UEs 23 in real time. The content of any of the messages may be any content in a Multipurpose Internet Mail Extensions (MIME) format, for example, texts, pictures, webpage, and video clips. The message conference service uses SIP Invite messages to set up a session, and performs a session through a Call Session Control Function (CSCF) 24. After the session is set up, the media streams are transmitted through a Message Session Relay Protocol (MSRP).

The MC 21 is configured to: receive filtering setting information, encapsulate a protocol package according to filtering setting information, and send the protocol package that carries the filtering setting information to the MP 22.

The MP 22 is configured to: receive the protocol package from the MC 21, resolve the protocol package to obtain the filtering setting information, and filter messages received and/or sent by the MP 22 according to the filtering setting information. The filtered messages are transmitted through MSRP.

In this embodiment, the MC encapsulates a protocol package that carries the filtering setting information according to the received filtering setting information, and sends the protocol package to the MP; and the MP resolves the protocol package to obtain the corresponding filtering setting information, and filters the received and sent messages according to the filtering setting information. In this way, the service-layer filtering setting information may be sent to the media layer through the control layer, the filtering setting information on the control layer is synchronized with that on the media layer. Therefore, the messages are filtered in the IMS system of the separation network architecture.

FIG. 3 shows a structure of an MC according to an embodiment of the present invention. As shown in FIG. 3, the MC includes a receiving unit 31, an encapsulating unit 32, and a sending unit 33.

The receiving unit 31 is configured to receive filtering setting information or a filtering script that carries the filtering setting information. The sources of the filtering setting information are not limited. For example, the filtering setting information may be sent by the user to the MC through the service layer; or, the filtering setting information is sent by the user to the control-layer AS, and the AS forwards the received filtering setting information to the MC; or, the AS receives the filtering setting information sent by the user or set by the service provider system, generates a filtering script according to the filtering setting information, and forwards the filtering script that carries the filtering setting information to the MC.

The encapsulating unit 32 is configured to encapsulate a protocol package according to the filtering setting information or the filtering script that carries the filtering setting information received by the receiving unit 31, where the protocol package carries the filtering setting information or the filtering script.

The sending unit 33 is configured to send the protocol package encapsulated by the encapsulating unit 32 to the media-layer MP.

Based on the technical solution in this embodiment, the encapsulating unit may include at least a first encapsulating unit and a second encapsulating unit. The first encapsulating unit is configured to: encapsulate a protocol package according to the filtering setting information or the filtering script that carries the filtering setting information received by the receiving unit, and forward the encapsulated protocol package to the sending unit. The second encapsulating unit is configured to: generate a filtering script that carries the filtering setting information according to the received filtering setting information, encapsulate the protocol package according to the filtering script, and forward the encapsulated protocol package to the sending unit.

In this embodiment, the encapsulating unit 32 encapsulates a protocol package according to the filtering setting information or the filtering script that carries the filtering setting information received by the receiving unit, and the sending unit sends the protocol package that carries the filtering script that carries the filtering setting information to the MP. In this way, the control layer can send the service-layer filtering setting information to the media-layer MP, thus facilitating synchronization of the filtering setting information between the control layer and the media layer. Therefore, messages are filtered in the separation network architecture. The MC in this embodiment is applicable to the message filtering system of separation architecture under the present invention.

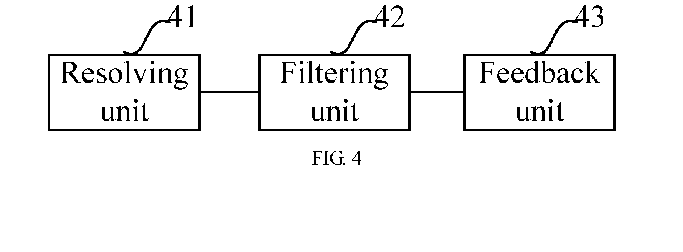

FIG. 4 shows a structure of an MP according to an embodiment of the present invention. As shown in FIG. 4, the MP includes: a resolving unit 41 and a filtering unit 42.

The resolving unit 41 is configured to resolve a received protocol package to obtain filtering setting information carried in the protocol package.

The filtering unit 42 is configured to filter received and/or sent messages according to the filtering setting information obtained by the resolving unit.

Based on the technical solution in this embodiment, the resolving unit 41 may include at least one of a first resolving unit, a second resolving unit and a third resolving unit. The first resolving unit is configured to resolve the corresponding fields of the received protocol package to obtain the filtering setting information. The second resolving unit is configured to resolve the received protocol package to obtain the filtering script in the protocol package, and is configured to read the filtering script and obtain the filtering setting information in the filtering script. The third resolving unit is configured to resolve the received protocol package to obtain a Uniform Resource Locator (URL) of the filtering script in the protocol package, and obtain the filtering script according to the URL, and is configured to read the filtering script and obtain the filtering setting information in the filtering script.

The filtering setting information includes filtering condition information and filtering operation information. Accordingly, the filtering unit 42 is specifically configured to filter the message received and/or sent by the MP if the message received and/or sent by the MP fulfills the filtering conditions.

Based on the technical solution in this embodiment, the MP may further include a feedback unit 43. The feedback unit 43 is configured to return the corresponding error code to the MC if the filtering operation performed by the filtering unit 42 fails.

In this embodiment, the resolving unit 41 resolves the received protocol package to obtain the filtering setting information carried in the protocol package, and the filtering unit 42 filters the received and/or sent messages according to the filtering setting information. In this way, the media layer may obtain the filtering setting information sent by the control layer, thus facilitating synchronization of the filtering setting information between the control layer and the media layer. Therefore, messages are filtered in the separation network architecture. The MP in this embodiment is applicable to the message filtering system of separation architecture under the present invention.

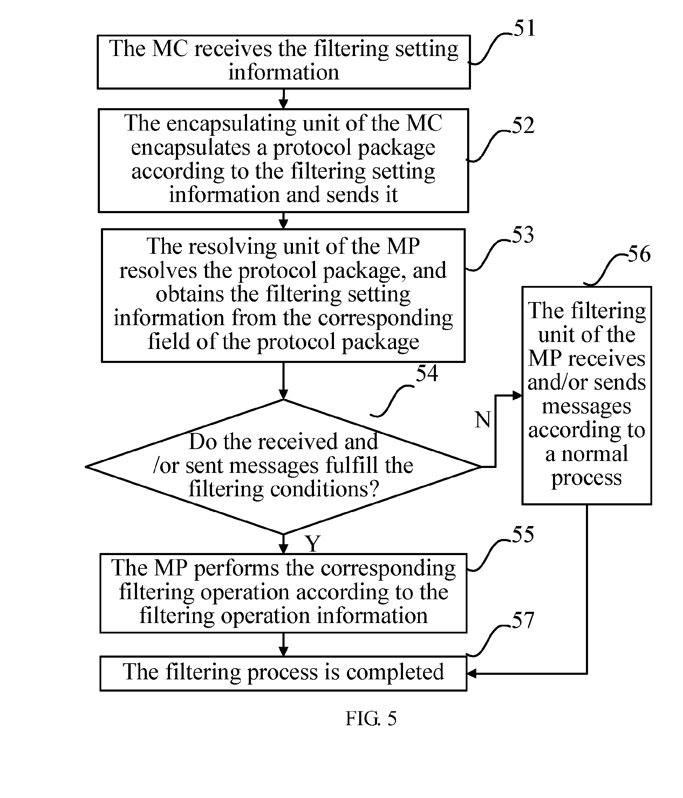

In a message filtering method provided in another embodiment of the present invention, the MP resolves a received protocol package to obtain filtering setting information carried in the protocol package, and filters the messages received and/or sent by the MP according to the filtering setting information. FIG. 5 is a flowchart of a message filtering method according to the first embodiment of the present invention. To help those skilled in the art better understand the technical solution of the message filtering method, FIG. 5 illustrates the message filtering method in the separation architecture, taking the message filtering system shown in FIG. 2 as an example. In the system shown in FIG. 2, the MC may deliver filtering setting information to the MP in many ways. In this embodiment, the filtering setting information is encapsulated by means of an H.248 protocol package. As shown in FIG. 2 and FIG. 5, the message filtering method includes the following content.

Block 51: The receiving unit of the MC receives the filtering setting information, and sends the received filtering setting information to the encapsulating unit.

The sources of the filtering setting information are not limited. For example, the filtering setting information may be sent by the user to the MC through the service layer; or, the filtering setting information is sent by the user to the control-layer AS, and the AS forwards the received filtering setting information to the MC; or, the AS receives the filtering setting information sent by the user or set by the service provider system, generates a filtering script according to the filtering setting information, and forwards the filtering script that carries the filtering setting information to the MC.

The filtering setting information includes filtering condition information and filtering operation information. The filtering condition information may include one of: message sender address, message volume, message content type, message format, message subject, and message transmission direction. The filtering operation information may be: discarding operation, storing operation, or forwarding operation.

The filtering condition information of address information of message sender instructs the MP to filter the messages according to the address information of message sender. "Message volume" instructs the MP to filter messages according to the message volume, and may be a specific value or value range. "Message content type" instructs the MP to filter the messages of a specific media type, for example, messages that carry audio or video files. "Message content format" instructs the MP to filter messages according to the specified message content media format, for example, filter messages of the mpeg or jpeg format. "Message subject" instructs the MP to filter the messages that includes a specific subject according to the specific subject. "Message transmission direction" instructs the MP to filter the messages in the receiving direction and/or sending direction.

In the filtering operation information, "discard" instructs the MP to discard a message. "Store" instructs the MP to store a filtered message, and the storage address of the message may be delivered to the MP through the MC, and the MP stores the message according to the delivered storage address of the message; or, the MC delivers an instruction which instructs the MP to allocate a storage address, and the MP allocates a storage address according to the instruction, stores the message to the allocated address and returns the storage address information to the MC. In addition, the storage address of the message may be preset on the MP, and, if the filtering operation information delivered by the MC is "store", the MP stores the received and/or sent messages onto the preset storage address, and may feed back the storage address information to the MC. "Forward" instructs the MP to forward the message. The forwarding address information may be delivered by the MC to the MP. The MP forwards the message to a forwarding address according to the forwarding address information; or, the forwarding address of the message may be preset on the MP, and, if the filtering operation information delivered by the MC is "forward", the MP forwards the received and/or sent messages to the preset forwarding address, and may feed back the forwarding address information to the MC.

The filtering setting information composed of the filtering condition information and the filtering operation information indicates that the corresponding filtering operation needs to be performed on the message when the filtering condition is fulfilled. For example, if the filtering condition information is "message volume greater than 20 M" and the filtering operation information in the filtering setting information is "discard", the filtering setting information indicates that the received/sent protocol package needs to be discarded if the size of the protocol package is greater than 20 M.

Block 52: The encapsulating unit of the MC encapsulates filtering setting information into a package of a standard protocol, and sends the protocol package that carries the filtering setting information to the resolving unit of the MP.

Because the IMS system is a separation architecture system, the control layer is separated from the media layer, the control-layer MC may obtain the filtering setting information on the service layer, but the MP on the media layer is unable to obtain the corresponding filtering setting information. Therefore, the MP is unable to perform filtering for the received/sent protocol package according to the filtering setting information. Therefore, a new mechanism of synchronizing the filtering setting information needs to be set up between the control-layer MC and the media-layer MP in the separation architecture such as IMS, which is different from the scenario of the centralized architecture.

Generally, the MGCP such as H.248/MeGaCo is applied to communication between the MC and the MP. In this embodiment, based on a standard protocol such as an H.248 protocol, the filtering setting information received by the receiving unit of the MC is carried in the corresponding field of an H.248 protocol package (namely, packet or message compliant with the H.248 protocol). Through encapsulation, the generated H.248 protocol package carries the filtering setting information.

The communication process based on the H.248 protocol is performed through command requests and responses exchanged between the MC and the MP. The commands include: Add, Modify, Subtract, Move, AuditValue, AuditCapabilities, Notify, and ServiceChange. Command parameters, also known as descriptors, are categorized into Property, Signal, Event, and Statistic. The parameters of service dependence aggregate into a package logically.

For example, when the encapsulating unit of the MC encapsulates the H.248 protocol package, the property field defined in the H.248 protocol package is set so that the property information of the H.248 protocol package carries the filtering setting information received by the MC. The filtering setting information may include filtering condition information and filtering operation information.

In practice, to discriminate the protocol packages that carry different filtering setting information, the protocol package may be named according to the filtering operation type. For example, a protocol package is named "filtering discarded package", "filtering stored package", or "filtering forwarded package". A property is defined for each filtering operation type package according to a filtering condition. Each operation type package such as "filtering discarded package", "filtering stored package", and "filtering forwarded package" includes at least the following properties: "message sender address", "message volume", "message content type", "message content format", "message subject", and "filtering mode". In addition, the "filtering stored package" may include a storage address" property, and the "filtering forwarded package" may include a forwarding address property.

The "message sender address" property instructs to filter messages according to the address of the sender of the message. The "message volume" property information may be a specific value or value range, instructing that the filtering should be performed according to the specific value or value range. The "message content type" property instructs the MP to filter the messages of a specific media type, for example, messages that carry audio or video files. The "message content format" property information instructs the MP to filter messages according to the specified message content media format, for example, filter messages of the mpeg or jpeg format. The "message subject" property information instructs the MP to filter the messages of a specific subject. The "storage address" property information indicates the storage address information, and the "forwarding address" property information indicates the forwarding address information. The "filtering mode" property information indicates the filtering mode, and the parameter value of the "filtering mode" property may be two bytes, which carry the ingress message transmission direction information and the egress message transmission direction information respectively. In each bit of each byte, one bit represents the filtering mode. If the value of this bit is "1", it indicates that the messages are filtered according to the filtering condition; if the value of this bit is "0", it indicates that the filtering needs to be stopped. Other bits indicate whether to enable a filtering condition. If the value of such bits is "0", it indicates not to enable the filtering condition; if the value of such bits is "1", it indicates to enable the filtering condition. The redundant bits are reserved for future use, and their values are "0" by default, indicating no need of filtering. The bits of a byte are defined as follows:
[low bytes]
   bit 0 - filtering messages according to the message sender address in the ingress flow direction
   bit 1 - filtering messages according to the message volume in the ingress flow direction
   bit 2 - filtering messages according to the message content in the ingress flow direction
   bit 3 - filtering messages according to the message content format in the ingress flow direction
   bit 4 - filtering messages according to the message subject in the ingress flow direction
   bit 5 - reserved
   bit 6 - reserved
   bit 7 - ingress flow direction filtering mode
[high bytes]
   bit 0 - filtering messages according to the message sender address in the egress flow direction
   bit 1 - filtering messages according to the message volume in the egress flow direction
   bit 2 - filtering messages according to the message content in the egress flow direction
   bit 3 - filtering messages according to the message content format in the egress flow direction
   bit 4 - filtering messages according to the message subject in the egress flow direction
   bit 5 - reserved
   bit 6 - reserved
   bit 7 - egress flow direction filtering mode

After the MP resolves out the filtering setting information and performs presetting according to the filtering setting information, the MP may update the filtering setting information as required. The encapsulating unit of the MC uses a field of the protocol package compliant with the H.248 protocol to bear the filtering information that needs to be updated, and encapsulates the H.248 protocol package. After receiving the protocol package that carries the filtering update information, the MP updates the filtering setting information previously received by the MP according to the filtering update information. For example, the filtering update information is "modify the sender address property value from A to B", and the MP receives the protocol package that carries the filtering update information. When the MP resolves the protocol package to obtain the filtering update information, the MP updates the sender address property value in the previously received filtering setting information (modifies A to B), and then the filtering unit of the MP performs message filtering for the sender address B. Likewise, the specified filtering condition setting may be deleted as required. For example, the filtering condition "filtering messages according to the message subject in the ingress flow direction" is deleted. The deletion operation may be effected by setting bit 4 of the low byte of the filtering mode property to "0", and therefore, the property setting corresponding to this byte (namely, filtering mode setting) is invalid. The MC may control the MP to enable/disable the filtering function by setting bit 7 of the low/high byte of the filtering mode property to "1" or "0". When bit 7 of the low byte of the filtering mode property is set to "1", the ingress flow direction filtering mode is enabled. If bit 7 of the low byte of the filtering mode property is set to "0", the ingress flow direction filtering mode is disabled. If bit 7 of the high byte of the filtering mode property is set to "1", the egress flow direction filtering mode is enabled. If bit 7 of the high byte of the filtering mode property is set to "0", the egress flow direction filtering mode is disabled, and so on.

In addition, when the encapsulating unit of the MC encapsulates the H.248 protocol package, the event field and the signal field defined in the H.248 protocol package may be set so that the property information of the H.248 protocol package carries the filtering setting information received by the MC. In the process of encapsulating the H.248 protocol package, the event field may carry the filtering condition information which instructs the MP to detect the message; and the signal field may carry the filtering operation information which instructs the MP to detect the message.

The MC indicates the MP detection event (filtering condition) according to the command of the nested signal of the event, and then performs an operation (filtering operation) according to the specified signal. For example, the filtering setting information received by the MC is "discard the message if the sender address is A", the MC sends an event "sender address is A" and a signal "discard message" in the H.248 protocol, and sends the event and the signal to the MP. Afterward, the MP discards the message when finding that the sender address is A, thus filtering the message as required.

In the process of encapsulating the H.248 protocol package in which the event field and the signal field of the H.248 protocol are set, the filtering setting may be updated, the specified filtering condition setting may be deleted, and the filtering function may be enabled or disabled. The update is implemented by delivering a new event and signal, the deletion is implemented by setting the existing event and signal to null, and the enabling/disabling is implemented by adding an independent signal.

Block 53: The resolving unit of the MP receives the protocol package that carries the filtering setting information, and retrieves the filtering condition information and the filtering operation information from the corresponding field of the protocol package.

Block 54: The filtering unit of the MP retrieves the message property of the message received and/or sent by the MP port, and judges whether the property of the message received and/or sent by the MP port fulfills the filtering condition according to the filtering condition information and filtering operation information resolved out by the resolving unit. If the property of the message received and/or sent by the MP port fulfills the filtering condition, Block 55 occurs; if the property of the message received and/or sent by the MP port does not fulfill the filtering condition, Block 56 occurs.

The filtering unit of the MP may judge the property of the message received and/or sent by the MP port in this way: The MP searches for the message field that matches the retrieved filtering setting information after the received or sent message is resolved. For example, the MP may find the sender address, message volume and message subject from the corresponding key fields in the message header; and find the message type and the message content format from the corresponding key fields in the message header or from the corresponding key fields in the message body.

Block 55: The MP performs a filtering operation according to the filtering operation information, and proceeds to Block 57.

The filtering operations include "discard", "store", and "forward", namely, discarding, storing, or forwarding the received and/or sent messages that fulfill the filtering conditions. In the filtering operation information, "discard" instructs the MP to discard the message. "Store" instructs the MP to store the filtered message, and the storage address of the message may be delivered to the MP through the MC, and the MP stores the message according to the delivered storage address; or, the MC delivers an instruction which instructs the MP to allocate a storage address, and the MP allocates a storage address according to the instruction, stores the message to the allocated address and feeds back the storage address information to the MC. In addition, the storage address of the message may be preset on the MP, and, if the filtering operation information delivered by the MC is "store", the MP stores the received and/or sent messages onto the preset storage address, and may feed back the storage address information to the MC. "Forward" indicates that the MP is required to forward the message. The forwarding address information may be delivered by the MC to the MP. The MP forwards the message to a forwarding address according to the forwarding address information; or, the forwarding address of the message may be preset on the MP, and, if the filtering operation information delivered by the MC is "forward", the MP forwards the received and/or sent messages to the preset forwarding address, and may feed back the forwarding address information to the MC.

Block 56: The filtering unit of the MP receives and/or sends the messages received and/or sent by the port without filtering.

Block 57: The filtering process is completed.

In this embodiment, the MC encapsulates the protocol package, the protocol package carries the filtering setting information received from the service layer, and the encapsulated protocol package that carries the filtering setting information is sent to the media-layer MP; the MP resolves the corresponding field of the protocol package to obtain the filtering condition information and the filtering operation indication, and filters the messages that fulfill the filtering conditions. In this way, the filtering setting information on the service layer may be sent to the media layer through the control layer, the filtering setting information is synchronized between the control layer and the media layer. Therefore, the messages are filtered in the separation network architecture.

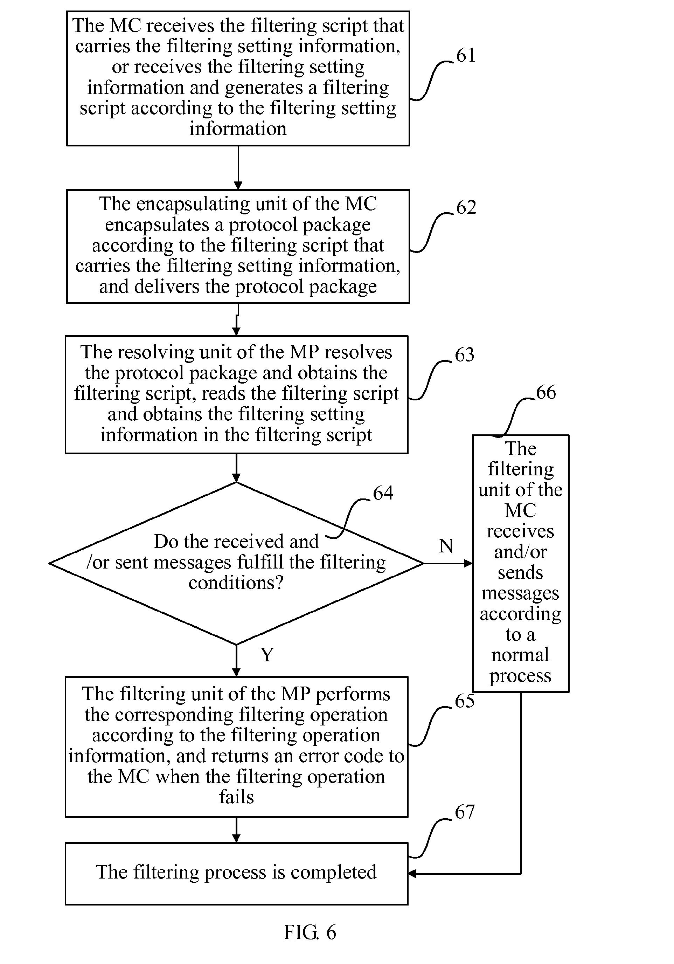

FIG. 6 is a flowchart of a message filtering method according to the second embodiment of the present invention. This embodiment differs from the first embodiment of the method filtering method in the separation network architecture in that: The MC generates a filtering script corresponding to the filtering setting information, and encapsulates the protocol package according to the filtering script, thus synchronizing the filtering setting information between the MC and the MP. As shown in FIG. 6, the message filtering method in this embodiment includes the following blocks:
Block 61: The receiving unit of the MC receives the filtering setting information, generating a filtering script out of the received filtering setting information, and sends the filtering script that carries the filtering setting information to the encapsulating unit; or, the AS receives the filtering setting information, generates a filtering script that carries the filtering setting information, and sends the filtering script to the encapsulating unit.

The filtering script may be generated according to the filtering setting information through a script generation language (such as Sieve language). The Sieve language is a standard universal language for Internet email filtering, and can perform filtering operations based on various software platforms. The filtering script based on the Sieve language analyzes the email or message, tests the property of the email or message according to the conditions set by the script, and performs the corresponding filtering operations on the emails or messages that fulfill the filtering conditions. The filtering operations include: discard, reject, forward (redirect), store (fileinto), stop, and keep. Given below is an example of a filtering script that is generated based on the Sieve language and indicates the filtering setting information:

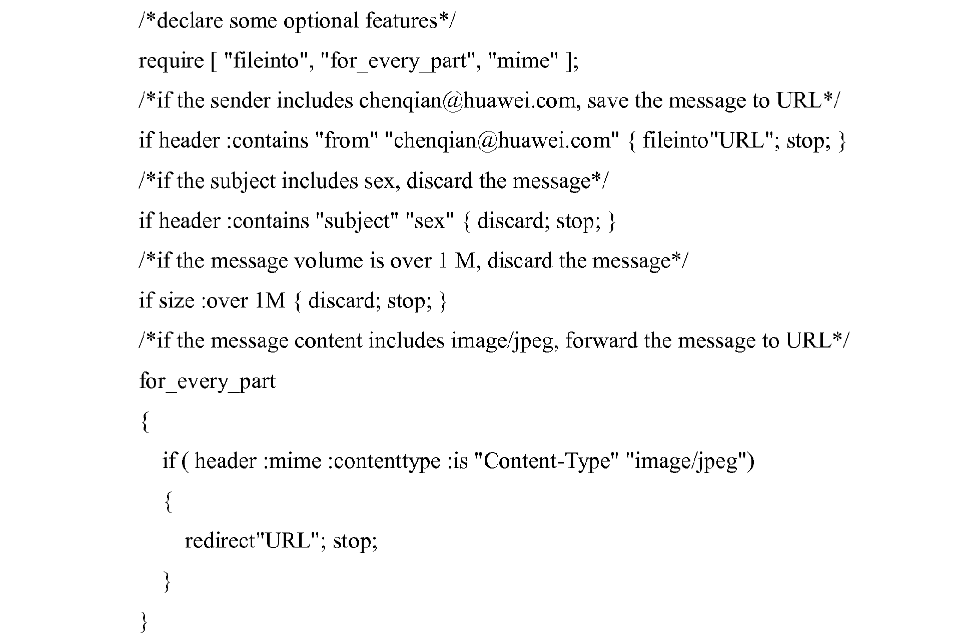

Block 62: The encapsulating unit of the MC encapsulates the protocol package (such as H.248 protocol package) according to the filtering script that carries the filtering setting information, and sends the protocol package that carries the filtering script to the resolving unit of the MP.

Block 63: The resolving unit of the MP receives the protocol package that carries the filtering script, resolves the protocol package and obtains the filtering script, reads the filtering script and obtains the filtering setting information in the filtering script.

For example, if the script language applied in generating the filtering script is Sieve, the resolving unit of the MP may use the Sieve language to read the filtering script and obtain the filtering setting information in the filtering script.

The resolving unit of the MP may receive the filtering script passively, for example, after the MC sends the filtering script to the MP directly. The resolving unit of the MP may also receive the filtering script actively. For example, the MC sends a URL of the filtering script to the MP, and the MP obtains the filtering script according to the URL, resolves the filtering script and obtains the filtering condition information and filtering operation information in the filtering script.

Block 64: The filtering unit of the MP retrieves the message property of the message received and/or sent by the MP port, and judges whether the property of the message received and/or sent by the MP port fulfills the filtering condition according to the filtering condition information and filtering operation information resolved out by the resolving unit. If the property of the message received and/or sent by the MP port fulfills the filtering condition, Block 65 occurs; if the property of the message received and/or sent by the MP port does not fulfill the filtering condition, Block 66 occurs.

Block 65: The filtering unit of the MP performs a filtering operation according to the filtering operation information. When the filtering operation performed by the filtering unit of the MP fails, the filtering unit of the MP returns the corresponding error code to the MC, and proceeds to Block 67.

Block 66: The filtering unit of the MP receives and/or sends the messages received and/or sent by the port without filtering.

Block 67: The filtering process is completed.

In this embodiment, the MC uses a script language to generate a filtering script corresponding to the filtering setting information or receives a filtering script that carries the filtering setting information, and encapsulates the protocol package according to the filtering script; the MP receives and resolves the protocol package to obtain the filtering script, and reads the filtering script to obtain the filtering condition information and filtering operation information, and performs the corresponding filtering operation for the messages that fulfill the filtering conditions. When the filtering operation fails, the MP returns the corresponding error code to the MC. In this way, the filtering setting information on the service layer may be sent to the media layer through the control layer, the filtering setting information is synchronized between the control layer and the media layer. Therefore, the messages are filtered in the separation network architecture.

Persons of ordinary skill in the art should understand that all or a part of the steps of the method according to the embodiments of the present invention may be implemented by a program instructing relevant hardware. The program may be stored in a computer readable storage medium. When the program runs, the steps of the method according to the embodiments of the present invention are performed. The storage medium may be any medium that is capable of storing program codes, such as ROM, RAM, magnetic disk, or CD-ROM.

It is understandable to those skilled in the art that the accompanying drawings are only schematic diagrams of the exemplary embodiments, and the units or processes in the accompanying drawings are not mandatory for implementing the present invention.

It is understandable to those skilled in the art that the units in an apparatus provided in an embodiment of the present invention may be distributed in the apparatus described herein, or may be located in one or more apparatuses different from the apparatus described herein. The units may be combined into one unit, or split into multiple subunits.

The serial number of the embodiments of the present invention is designed to facilitate description only, and does not represent order of precedence.

Persons of ordinary skill in the art should understand that all or part of the steps of the method under the present invention may be implemented by a program instructing relevant hardware. The program may be stored in a computer readable storage medium. When the program runs, the steps of the method specified in the above embodiments are performed. The storage medium may be a magnetic disk, CD-ROM, Read-Only Memory (ROM), or Random Access Memory (RAM).

Finally, it should be noted that the above embodiments are merely provided for describing the technical solutions of the present invention, but not intended to limit the present invention. It is apparent that persons skilled in the art can make various modifications and variations to the invention without departing from the cope of the invention. The present invention is intended to cover the modifications and variations provided that they fall in the scope of protection defined by the following claims or their equivalents.

## Claims

1. A message filtering system, comprising:
a Media Controller, MC, configured to: encapsulate a protocol package according to filtering setting information, and send the protocol package that carries the filtering setting information to a Media Processor, MP; and
the MP, configured to: resolve the received protocol package to obtain the filtering setting information, and filter at least one of a received message and a sent message according to the filtering setting information.

2. A Media Controller, MC, comprising:
a receiving unit, configured to receive one of filtering setting information and a filtering script that carries the filtering setting information;
an encapsulating unit, configured to encapsulate a protocol package according to the received filtering setting information; and
a sending unit, configured to send the protocol package that carries the filtering setting information to an MP.

3. The MC according to claim 2, wherein the encapsulating unit comprises at least one of the following encapsulating units:
a first encapsulating unit, configured to: encapsulate the protocol package according to one of the received filtering setting information and the filtering script that carries the filtering setting information, and forward the encapsulated protocol package to the sending unit; and
a second encapsulating unit, configured to generate the filtering script that carries the filtering setting information according to the received filtering setting information, encapsulate the protocol package according to the filtering script, and forward the encapsulated protocol package to the sending unit.

4. A Media Processor, MP, comprising:
a resolving unit, configured to resolve a received protocol package to obtain filtering setting information carried in the protocol package; and
a filtering unit, configured to filter at least one of a received message and a sent message according to the filtering setting information.

5. The MP according to claim 4, wherein the resolving unit comprises at least one of the following resolving units:
a first resolving unit, configured to resolve related fields of the received protocol package to obtain the filtering setting information;
a second resolving unit, configured to resolve the received protocol package to obtain a filtering script in the protocol package, configured to read the filtering script and obtain the filtering setting information in the filtering script; and
a third resolving unit, configured to resolve the received protocol package and obtain a Uniform Resource Locator, URL, of the filtering script in the protocol package, to the filtering script according to the URL, configured to read the filtering script and obtain the filtering setting information in the filtering script.

6. The MP according to claim 5, wherein:
the filtering setting information comprises filtering condition information and filtering operation information;
the filtering unit is configured to filter at least one of a messages received by the MP and a message sent by the MP if the messages fulfill filtering conditions.

7. The MP according to any one of claims 4-6, further comprising:
a feedback unit, configured to return a corresponding error code to a Media Controller, MC, when the filtering operation performed by the filtering unit fails.

8. A message filtering method, comprising:
resolving a received protocol package to obtain filtering setting information carried in the protocol package, and
filtering at least one of a received message and a sent message according to the filtering setting information.

9. The message filtering method according to claim 8, wherein: before the resolving the received protocol package to obtain the filtering setting information carried in the protocol package, the method further comprises:
receiving, by a Media Processor, MP, an encapsulated protocol package from a Media Controller, MC, wherein the encapsulated protocol package carries the filtering setting information.

10. The message filtering method according to claim 8, wherein: the MC encapsulates the protocol package according to the filtering setting information received by the MC in the following way:
encapsulating, by the MC, the protocol package according to one of the filtering setting information received by the MC and a filtering script that carries the filtering setting information; or
generating, by the MC, the filtering script that carries the filtering setting information according to the filtering setting information received by the MC, and encapsulating, by the MC, the protocol package according to the filtering script.

11. The message filtering method according to any one of claims 8-10, wherein: the resolving of the received protocol package to obtain the filtering setting information carried in the protocol package comprises:
resolving corresponding fields of the received protocol package to obtain the filtering setting information; or
resolving the received protocol package to obtain the filtering script in the protocol package, reading the filtering script to obtaining the filtering setting information in the filtering script; or
resolving the received protocol package to obtain a Uniform Resource Locator, URL, of the filtering script in the protocol package, obtain the filtering script according to the URL, reading the filtering script to obtain the filtering setting information in the filtering script.

12. The message filtering method according to claim 11, wherein:
the filtering setting information comprises filtering condition information and filtering operation information;
the filtering at least one of the received message and the sent message according to the filtering setting information comprises:
filtering at least one of the received message and the sent message if the at least one of the received message and the sent message fulfills filtering conditions respectively.

13. The message filtering method according to claim 12, wherein: after the performing the filtering operations on the received and/or sent messages according to the filtering setting information, the method further comprises:
returning a corresponding error code to the MC if the filtering operations fail.

14. The message filtering method according to claim 12, wherein:
after the resolving the received protocol package to obtain the filtering setting information carried in the protocol package, the method further comprises:
updating the filtering setting information previously received by the MP according to filtering update information after receiving the protocol package that carries the filtering update information.

15. The message filtering method according to claim 14, wherein:
the filtering update information comprises at least one of: modifying at least one filtering condition; deleting at least one filtering condition; performing at least one filtering operation; and stopping at least one filtering operation.
